# EUROPEAN PATENT APPLICATION

(11) **EP 2 426 157 A1**
(43) Date of publication of application: **07.03.2012**
(21) Application number: 10175023.0
(22) Date of filing: 02.09.2010
(51) Int. Cl.: C08G 18/32, C08G 18/38, C08G 59/50, C08K 5/18

(54) **Diamine compositions and use thereof**

(71) Applicant: Lonza Ltd, 4052 Basel (CH)
(72) Inventor: Ellinger, Stefan, 3930 Visp (CH); Abgottspon, Magnus, 3933 Staldenried (CH); La Delfa, Gaetano, 3904 Naters (CH); Eyer, Sebastian, 3902 Brig-Glis (CH)
(74) Representative: Winter, Brandl, Fürniss, Hübner, Röss, Kaiser, Polte - Partnerschaft

(57) **Abstract**

The invention describes curing compositions for the preparation of polyurethanes and epoxy resins which comprise at least two aromatic or non-aromatic diamine compounds. The diamine compounds are present in a weight ratio allowing them to form an amorphous or liquid mixed phase when a molten mixture of these compounds is cooled to room temperature. Due to their low viscosity, compositions comprising such an amorphous or liquid mixed phase can conveniently be used in the preparation of polyurethanes and epoxy resins even at temperatures below the melting point of the individual diamines. The compositions can also be used to adjust the gel time and the glass transition temperature of polyurethanes and epoxy resins.

## Description

The present invention relates to diamine compositions and their use as chain extenders or curing agents for polyurethanes and epoxy resins.

The use of chain extenders and curing agents (in the following collectively called curing agents) for the preparation of polyurethanes and epoxy resins is well known in the art. Polyurethanes, for example, may be obtained by reacting compounds having H-reactive groups such as polyether polyols or polyester polyols with a diisocyanate to form a prepolymer, which in a second step is then reacted with a curing agent to form the polyurethane. Epoxy resins, on the other hand, may be obtained by reacting epichlorohydrin with an alcohol to obtain a glycidyl derivative which then is reacted with a curing agent to obtain the cured epoxy resin.

The structure of the curing agents and the reactivity of their functional groups are often used to modify the properties of the final product or to control the reaction rate of the polymer formation and the processability of the polymer. However, while properties such as viscosity, glass transition temperature (T_{g}) or gel time may depend on the choice of the curing agent, these properties cannot conveniently be adjusted with the available agents. From a different practical aspect, many conventional curing agents have a high melting point which makes the preparation of polyurethanes or epoxy resins expensive and inconvenient because of the high energy input and high temperatures required to obtain homogenous mixtures of the reaction components. If the curing agent is added in a solvent, the solvent may affect the properties of the final product and must be removed. Moreover, many compounds used to adjust properties such as gel time, for example 4,4'-methylene-bis-(ortho-chloroaniline) (MOCA), are listed as toxic materials.

EP-A-0 171 588 discloses compositions containing 2,2'-dichloro-6,6'-diethylmethylene-bis-aniline together with other aromatic diamines, wherein these compositions are obtained by a condensation reaction of 2-ethyl-6-chloroaniline and various 2,6-dialkylanilines with formaldehyde. Depending on the starting material, various mixtures are obtained resulting in different pot lives when added to a polyurethane prepolymer. Following the condensation reaction, however, these mixtures also contain unreacted educts which must be removed before use as it results in endcapping of the formed polymer. Moreover, the effect on pot life depends on the starting material and is hard to predict.

The object of the present invention was to provide a curing agent for the production of polyurethanes and epoxy resins which can be used in a simple and precise manner to adjust the properties of the final product or of the reaction mixture according to the demands, which can be easily manufactured and which lowers overall energy costs and allows safe handling.

According to the invention, this object has been achieved by a curing composition for the preparation of polyurethanes and epoxy resins, said composition comprising at least two diamines selected from compounds of the following formulas:
(a) 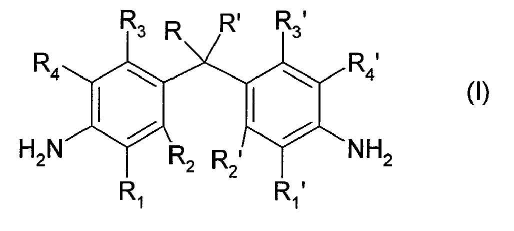 wherein:
   R and R' are the same or different and represent H or a C₁-C₄ alkyl group, or R and R' together with the carbon atom to which they are bound form a cyclopentane ring or a cyclohexane ring or a fluorene-9,9-diyl group;
   R₁ and R₁' are the same and represent H or a C₁-C₄ alkyl group;
      R₄ and R₄' are the same and represent H or a C₁-C₄ alkyl group;
   wherein at least one of R₁ / R₁' and R₄ / R₄' is a C₁-C₄ alkyl group; and
   R₂, R₂', R₃ and R₃' are the same or different and represent H, Cl or a C₁-C₄ alkyl group;
(b) 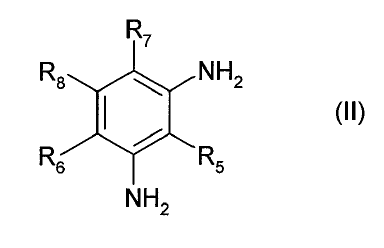 wherein:
   R₅, R₆, R₇ and R₈ are the same or different and represent H, a C₁-C₄ alkyl group, or an -SCH₃ group, wherein at least one of R₅, R₆, R₇ and R₈ is a C₁-C₄ alkyl group,
(c) 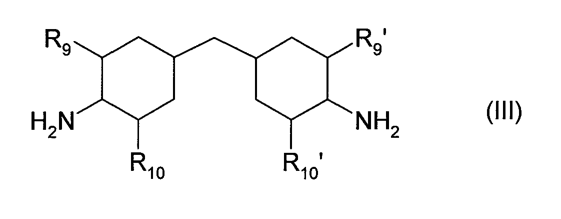 wherein:
   R₉, R₉', R₁₀ and R₁₀' are the same or different and represent a C₁-C₄ alkyl group;
      and
(d) 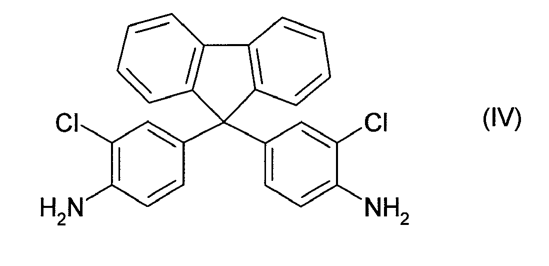
wherein the at least two compounds selected from compounds of the formulas (I), (II), (III) and/or (IV) are present in a weight ratio allowing these compounds to form an amorphous or liquid mixed phase at a temperature of 25 °C.

It has been found that compounds of the formulas (I), (II), (III) and (IV), which normally are crystalline substances in the solid state, upon cooling of molten mixtures thereof are capable of forming an amorphous or liquid mixed phase at a temperature of 25 °C. These amorphous or liquid mixed phases allow adjusting glass transition temperature and gel time of a polymer within a range which is between the values for the individual substances.

Accordingly, the present invention also provides a curing composition comprising or consisting of an amorphous or liquid mixed phase consisting of at least two diamines selected from compounds of the formulas (I), (II), (III) and (IV) as defined above.

The compounds of the formulas (I), (II), (III) and/or (IV) are commercially available or can be prepared according to methods known in the art. Aromatic methylene-bis-anilines of the formula (I), for example, can be prepared by subjecting correspondingly substituted mono-aromatic anilines to a condensation reaction with formaldehyde.

The term "amorphous" as used herein refers to an isotropic solid or glassy mixed phase. The term "mixed phase" as used herein refers to a homogeneous phase consisting of mixtures of compounds of the formulas (I), (II), (III) and/or (IV).

The term C₁-C₄ alkyl as used herein in the definitions of the residues R, R', R₁, R₁', R₂, R₂', R₃, R₃', R₄, R₄', R₅, R₆, R₇, R₈, R₉, R₉', R₁₀ and R₁₀' includes linear or branched alkyl groups, in particular methyl, ethyl, n-propyl, isopropyl, n-butyl, sec-butyl and tert-butyl. Examples of preferred alkyl groups include methyl, ethyl, propyl, isopropyl and sec-butyl. Most preferred alkyl groups are methyl, ethyl, propyl and isopropyl.

Preferably, R and R' are H or together with the carbon atom to which they are bound form a cyclohexane ring. More preferably, R and R' are H.

R₂, R₂', R₃ and R₃' in the formula (I), which may be the same or different, preferably represent H or Cl. More preferably, R₂ and R₂' and/or R₃ and R₃' are the same.

R₅, R₆, R₇ and R₈ in the compounds of the formula (II) are the same or different and preferably represent H, methyl, ethyl or isopropyl. More preferably, at least two, preferably three of R₅, R₆, R₇ and R₈ independently represent methyl, ethyl or isopropyl.

R₉, R₉', R₁₀ and R₁₀' in the formula (III), which may be the same or different, preferably represent methyl ethyl or isopropyl. More preferably, R₉ and R₉' and/or R₁₀ and R₁₀' are the same.

The curing composition of the present invention comprises or consists of at least two diamines selected from compounds of the formulas (I), (II), (III) and (IV) or of an amorphous or liquid mixed phase thereof. Typically, the curing composition or the amorphous or liquid mixed phase consists of two to four, preferably of two or three, most preferably of two diamines selected from compounds of the formulas (I), (II), (III) and (IV).

Preferably, at least one of the diamines present in the composition is selected from compounds of the formula (I). For example, if two diamines are used, one of the diamines is selected from the compounds of the formula (I) and one may be selected from compounds of the formulas (II), (III) or (IV), preferably of formula (II), or both diamines may be selected from aromatic compounds of the formula (I).

Preferably, at least one of the compounds of the formula (I) present in the composition of the invention has at least three substituents on each aromatic ring and/or has at least one substituent on the aromatic ring which is a branched alkyl group, preferably an isopropyl group.

According to one embodiment of the invention, at least one of the diamines present in the composition is selected from compounds of the formula (I) wherein R₂ and R₂' and/or R₃ and R₃' are the same and wherein one or both of the pairs R₂ / R₂' and R₃ / R₃' are Cl. Preferably, one or both of R₂ / R₂' and R₃ / R₃' is Cl and both of R₁ / R₁' and R₄ / R₄' are a C₁-C₄ alkyl group.

According to a further embodiment of the invention, at least one of the diamines in the composition is selected from compounds of the formula (I) wherein R₂ / R₂' and R₃ / R₃' are H. Preferably, if R₂ / R₂' and R₃ / R₃' are H, both R₁ / R₁' and R₄ / R₄' are a C₁-C₄ alkyl group. More preferably, at least one of the C₁-C₄ alkyl groups is a branched alkyl group, preferably an isopropyl group.

According to a particular preferred embodiment of the invention, at least one of the diamines present in the composition is selected from compounds of the formula (I) wherein one or both of R₂ / R₂' and R₃ / R₃' are Cl and preferably both of R₁ / R₁' and R₄ / R₄' are a C₁-C₄ alkyl group, and at least one of the diamines is selected from compounds of the formula (I) wherein R₂ / R₂' and R₃ / R₃' are H and both of R₁ / R₁' and R₄ / R₄' are a C₁-C₄ alkyl group, preferably with at least one of the C₁-C₄ alkyl groups being a branched alkyl group such as isopropyl.
According to a particular preferred embodiment of the invention, at least one of the at least two diamines is selected from the group consisting of 4,4'-methylene-bis-(2,6-diethylaniline) (M-DEA), 4,4'-methylene-bis-(2,6-diisopropylaniline) (M-DIPA), 4,4'-methylene-bis-(2-isopropyl-6-methylaniline) (M-MIPA), 4,4'-methylene-bis-(2-isopropylaniline) (M-bis-IPA), 4,4'-methylene-bis-(3-chloro-2,6-diethylanlinine) (M-CDEA), 3,5-dimethylthio-2,6-toluenediamine and 3,5-dimethylthio-2,4-toluenediamine and isomeric mixtures thereof (available under the trade name E-300), 3,5-diethyl-2,6-toluenediamine and 3,5-diethyl-2,4-toluenediamine and isomeric mixtures thereof (DETDA), and triethylphenylenediamine (TEPDA), 9,9-bis(4-amino-3-chloro-phenyl)-fluorene (CAF), 2,2'-dimethyl-4,4'-methylene-bis(cyclohexylamine) (M-MCHA) and 1,1-bis(4-aminophenyl)cyclohexane (DACH). Mixtures of two or more of these compounds are preferred, particularly mixtures wherein one of the diamines is selected from M-MIPA, M-DIPA and M-CDEA. Preferred combinations comprising or consisting of two aromatic diamines are M-MIPA/M-CDEA, M-MIPA/M-DIPA, M-CDEA/M-bis-IPA, M-MIPA/DETDA, and M-CDEA/DETDA, with mixtures of M-MIPA and M-CDEA being most preferred. Preferred combinations comprising or consisting of three aromatic diamines are M-CDEA/M-MIPA/DETDA and M-CDEA/M-DIPA/DETDA.

In the composition of the invention, the at least two diamine compounds in the composition are present in a weight ratio allowing these compounds to form an amorphous or liquid mixed phase at a temperature of 25 °C. This weight ratio can be determined by the skilled person by routine experiments. For example, if the amorphous or liquid mixed phase to be obtained consists of two compounds of the formulas (I), (II), (III) or (IV), the weight ratio (w/w) of the two compounds present in the starting composition typically is in a range of from 4:1 to 1:4, preferably of from 3:1 to 1:3, and most preferably of from 7:3 to 3:7. If the composition comprises more than two compounds, at least two of these compounds will be present in the above weight ratios. Typically, any of the compounds will be present in the composition in an amount of at least 10 % by weight, preferably of at least 15 % by weight, based on the total weight of the diamines present in the composition.

As described in more detail below, compositions comprising or consisting of the amorphous or liquid mixed phase are obtainable starting from the curing compositions of the invention comprising or consisting of the at least two diamines selected from compounds of the formulas (I), (II), (III) and/or (IV) in the above weight ratios.

The amorphous or liquid mixed phase will form, for example, when a homogeneous melt of a mixture of the at least two compounds of the formulas (I), (II), (III) and/or (IV) in the proper weight ratio as disclosed above is cooled, typically to a temperature of 25 °C or below, for example to a temperature of from 20 °C to 25 °C. The amorphous or liquid mixed phase is stable at a temperature of 20 °C to 25 °C, i.e., it does not re-crystallize. The amorphous state of the mixed phase of the invention can be verified by X-ray diffraction. The amorphous mixed phase consisting of compounds of the formulas (I), (II), (III) and/or (IV) has a softening point which is far below the melting point of the individual substances so that upon heating the amorphous mixed phase the resulting solution will regularly have a viscosity of less than 100000 mPa·s at 45 °C, determined using a Brookfield Viscosimeter LV-DV-II + Pro with a Thermoseal heating block and spindle number 18 and 34 (Brookfield Engineering, MA, USA).

The present invention, therefore, also provides a process for preparing a curing composition comprising or consisting of an amorphous or liquid mixed phase of at least two diamines selected from compounds of the formulas (I), (II), (III) and/or (IV), said process comprising the steps of:
(a) providing a melt of a mixture of diamines selected from compounds of the formulas (I), (II), (III) and/or (IV) as defined above in a weight ratio allowing these compounds to form an amorphous or liquid mixed phase at a temperature of 25 °C; and
(b) cooling the melt of step (a) to allow the compounds to form an amorphous or liquid mixed phase.

According to the invention, the melt of the diamine mixture is typically provided by mixing the individual diamines of the formulas (I), (II), (III) and/or (IV) in a proper weight ratio as described above. This mixture is then heated to a temperature sufficient to obtain a molten mixture. Typically, the mixture is heated to a temperature in a range of from 100 °C to 150 °C. Preferably, the mixture is agitated, for example by stirring, to obtain a homogeneous melt. Alternatively, the crystalline compounds of the formulas (I), (II), (III) and/or (IV) can be molten individually and the molten compounds can then be combined.

The homogeneous mixture thus obtained is then cooled to below the melting point of the individual substances to obtain a composition comprising or consisting of an amorphous or liquid mixed phase. Typically, the mixture is cooled to a temperature of from 10 °C to 25 °C or below, preferably to a temperature of from 15 °C to 25 °C, for example to about 20 °C. Cooling does not require any specific apparatus. A cooling rate of 4 °C/min will give excellent results, but it is sufficient to allow the molten mixture to stand at room temperature.

As the amorphous or liquid mixed phase results in a low viscosity of the compositions of the invention even and especially at temperatures below the melting point of the individual crystalline substances, these mixtures have the advantage that they can conveniently be used at low temperatures to provide homogeneous mixtures with the polymer components. This overcomes the need of heating the complete mixture of polymer components and diamines above the melting point of the crystalline substances, which is unfavourable not only with respect to energy but also for safety reasons. The viscosity of the curing compositions at application temperatures can be adjusted to individual needs by varying the relative amounts of the diamines. The compositions of the invention can be easily prepared by simple mixing, heating and cooling the components. By varying the relative amounts of the diamines, glass transition temperature and gel time of the polymers can be adjusted within a range which is between the glass transition temperature and the gel time observed for the individual compounds of the formulas (I), (II), (III) and (IV).

The present invention will be illustrated in more detail with reference to the following non-limiting examples and Figures, wherein:
- Figure 1: shows (a) a graph showing the viscosity of M-CDEA and M-MIPA alone as well as of mixtures thereof at different weight ratios (60/40 and 40/60) and temperatures, (b) a summary of the individual values of Figure 1a.
- Figure 2: shows an X-ray diagram of the amorphous mixed phase of a mixture of M-MIPA and M-CDEA in a weight ratio of 60:40.

### Examples

### Example 1

The aromatic methylene-bis-anilines M-MIPA and M-CDEA 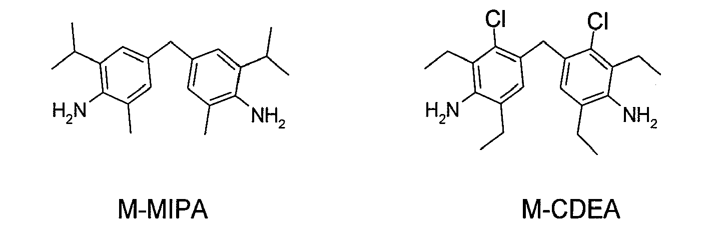 were mixed in crystalline form at room temperature in weight ratios of 60:40 and 40:60 and then heated to a temperature of 130 °C. The molten mixtures were homogenized by stirring and then cooled to 25 °C. Upon cooling, the mixtures stably formed an amorphous mixed phase which did not crystallize over a period of at least 2 months.

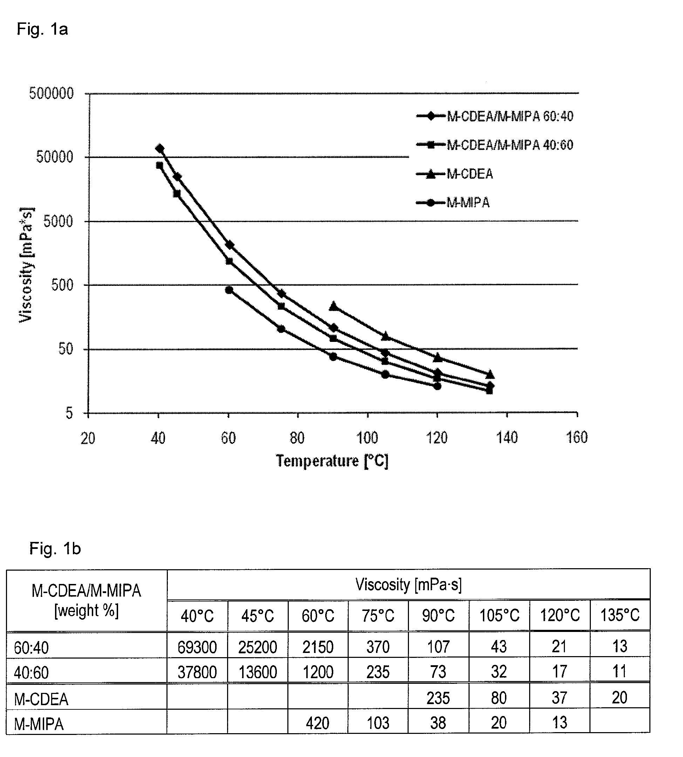

The amorphous products obtained were transferred into a Brookfield Viscosimeter LV-DV-II + Pro with a Thermoseal heating block and spindle number 18 and 34 (Brookfield Engineering, MA, USA). The viscosities of the products were determined at different temperatures (40 °C, 45 °C, 60 °C, 75 °C, 90 °C, 105 °C, 120 °C and 135 °C) and compared with the viscosities of M-CDEA and M-MIPA alone. The results are shown in Fig. 1a and 1b.

As will be seen from Fig. 1, viscosities of the individual substances M-MIPA *(Tₘ* = 70 - 73 °C) and M-CDEA (*Tₘ* = 87 - 90 °C) could be determined only at temperatures of 60 °C and above, i.e., temperatures close to or above the melting temperature of these substances.

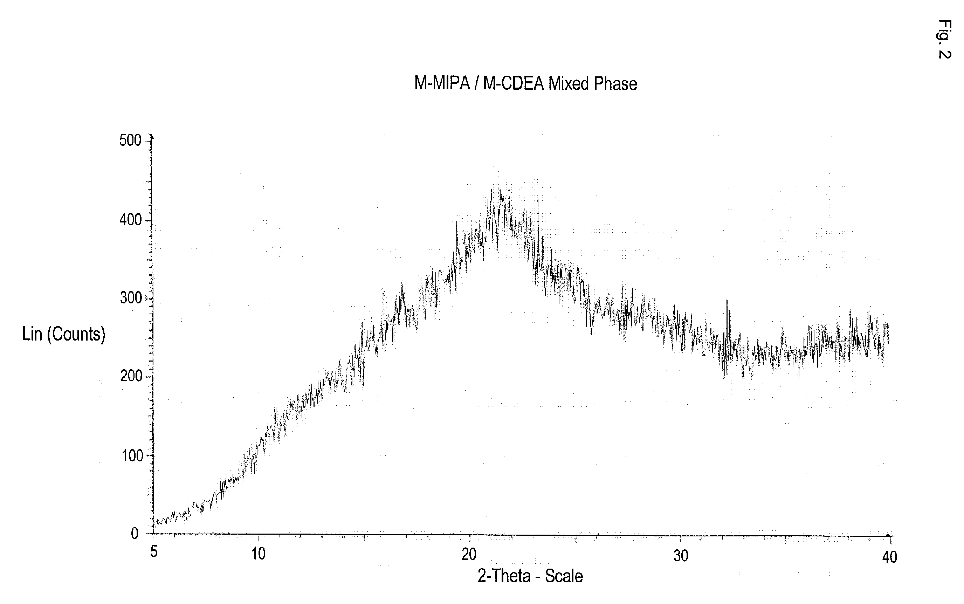

The mixture of M-CDEA and M-MIPA in a weight ratio of 40:60 was further subjected to X-ray powder diffraction using a Bruker D8 Advance-System with a Cu Kα-emitter and sample rotation. The diagram obtained for the mixture shows a diffuse scattering (Halo) demonstrating the completely amorphous structure of the product (Fig. 2). In contrast, the X-ray diagram obtained for the individual substances M-CDEA and M-MIPA, which was recorded as a control, showed characteristic discrete peaks indicating the crystalline structure as expected (data not shown).

Further mixtures consisting of two diamines in weight ratios of 60:40 and 40:60 were prepared as described above. These mixtures and their respective viscosities were determined as above and are summarized in Table 1.

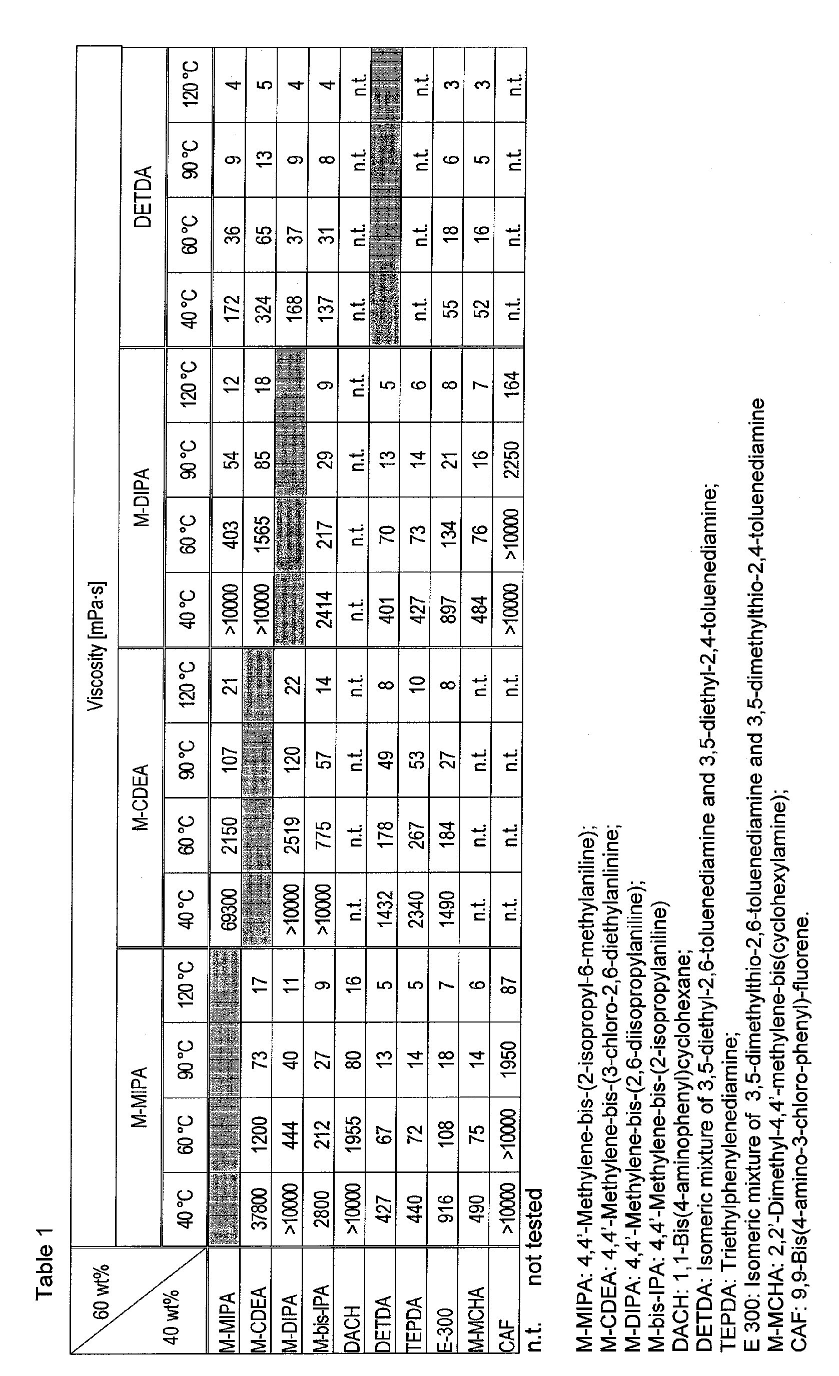

### Example 2

Various mixtures containing two aromatic diamines in weight ratios of 60:40 and 40:60 were prepared as described in Example 1. The obtained products were kept at room temperature (20 °C to 25 °C) and were visually inspected on a daily basis over a period of at least 10 days. The results are summarized in Table 2.

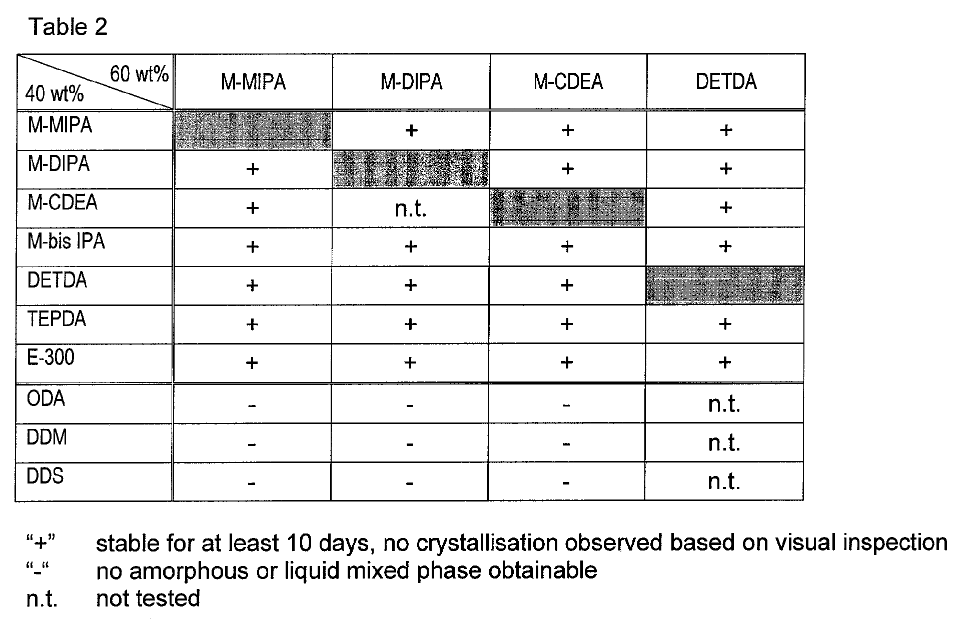

As will be seen, all compositions comprising compounds of the invention were stable for at least 10 days, i.e. no crystallisation was observed, while the compounds which are not part of the present invention, i.e., 4,4'-oxydianiline (ODA), 4,4'-methylenedianiline (DDM) and diaminodiphenylsulfone (DDS), did not result in stable amorphous or liquid products.

### Example 3

A commercially available epoxy resin produced from bisphenol A and epichlorohydrin (Epikote^{®} 828, Resolution Performance Products, OH, USA) was mixed at 50 °C with diamine mixtures obtained as described in Example 1. The amounts of epoxy resin and curing agent were adjusted to obtain a molar ratio of epoxy groups to amino groups of 1:1. The mixtures were stirred to obtain a homogeneous viscous solution and cooled to 25 °C.

The gel times of the viscous epoxy resin preparations were determined using a GELNORM^{®} Gel Timer (Gel Instrumente AG, Thalwil, Switzerland) according to DIN 16945 Page 1 and DIN 16916 at 130 °C, 150 °C and 180 °C. The results are shown in Table 3.

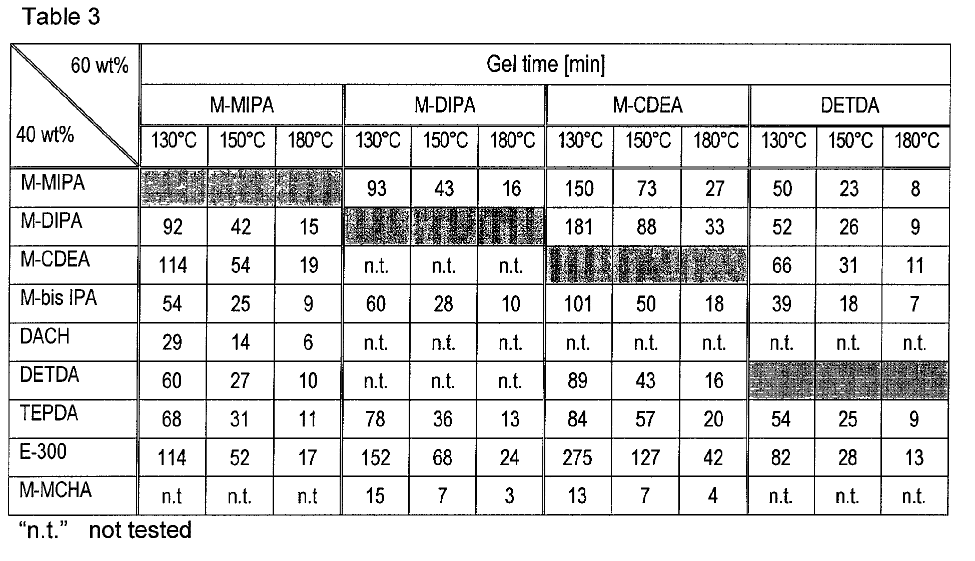

Mixtures of Epikote^{®} with M-CDEA and M-MIPA alone were prepared in the same manner for comparison. The results are shown in Table 4 below.

**Table 4**

| | Gel time [min] | | |
|---|---|---|---|
| | 130°C | 150°C | 180°C |
| M-CDEA | 265 | 128 | 48 |
| M-MIPA | 74 | 37 | 13 |

### Example 4

Mixtures of epoxy resin with diamine mixtures obtained as described in Example 1 were prepared as described in Example 3 and transferred into a metal cup and placed into a polymerization oven. The polymerization took place using the following temperature program: 4 h at 130 °C followed by 4 h at 160 °C and 4 h at 190 °C. Following polymerization, the samples were cut and onset of glass transition (Tg) was determined using a Mettler Toledo TMA/SDTA840 Thermomechanical Analyzer (Mettler Toledo, Giessen, Germany). The results are summarized in Table 5 below.

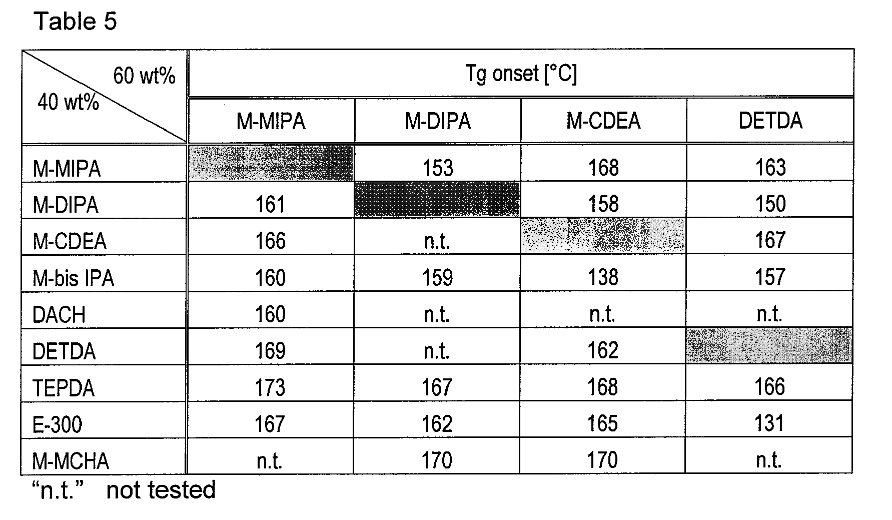

### Example 5

Mixtures comprising three different aromatic diamines in the weight ratios indicated in Table 6 were prepared as described in Example 1. The viscosity of the mixtures at 60 °C was determined as described in Example 1.

The obtained mixtures were further mixed with epoxy resin Epikote^{®} 828 as described in Example 3. The amounts of epoxy resin and diamine mixtures were adjusted to obtain a molar ratio of epoxy groups to amino groups of 1:1. The gel time of the preparations was determined as described in Example 3, and onset of glass transition (Tg) was determined as described in Example 4.

The results are summarized in Table 6.

**Table 6**

| Components | Amount [wt%] | Viscosity [mPa·s] at 60°C | Gel time [min] at 150°C | Tg onset [°C] |
|---|---|---|---|---|
| M-CDEA | 40 | | | |
| M-MIPA | 40 | 1288 | 73 | 145 |
| DETDA | 20 | | | |
| M-CDEA | 40 | | | |
| M-DIPA | 40 | 338 | 55 | 170 |
| DETDA | 20 | | | |
| TEPDA | 40 | | | |
| M-CDEA | 40 | 131 | 42 | 140 |
| M-DIPA | 20 | | | |
| TEPDA | 40 | | | |
| M-CDEA | 40 | 129 | 50 | 159 |
| M-DIPA | 20 | | | |

## Claims

1. Curing composition for the preparation of polyurethanes and epoxy resins, said composition comprising at least two diamines selected from compounds of the following formulas:
(a) 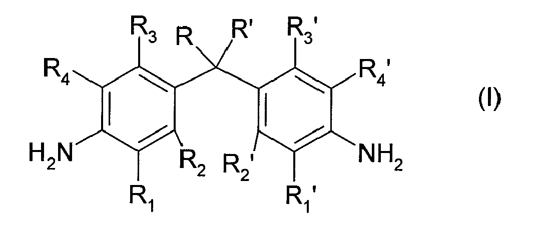 wherein:
R and R' are the same or different and represent H or a C₁-C₄ alkyl group, or R and R' together with the carbon atom to which they are bound form a cyclopentane ring or a cyclohexane ring or a fluorene-9,9-diyl group;
R₁ and R₁' are the same and represent H or a C₁-C₄ alkyl group;
R₄ and R₄' are the same and represent H or a C₁-C₄ alkyl group;
wherein at least one of R₁ / R₁' and R₄ / R₄' is a C₁-C₄ alkyl group; and
R₂, R₂', R₃ and R₃' are the same or different and represent H, Cl or a C₁-C₄ alkyl group;
(b) 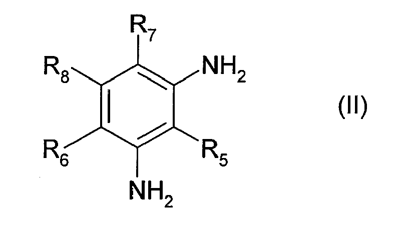 wherein:
R₅, R₆, R₇ and R₈ are the same or different and represent H, a C₁-C₄ alkyl group, or an -SCH₃ group, wherein at least one of R₅, R₆, R₇ and R₈ is a C₁-C₄ alkyl group,
(c) 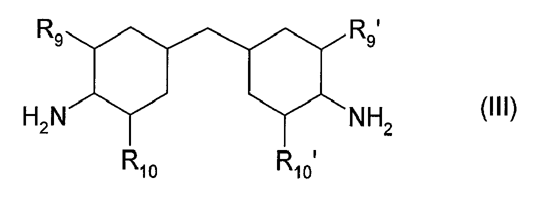 wherein:
R₉, R₉', R₁₀ and R₁₀' are the same or different and represent a C₁-C₄ alkyl group;
and
(d) 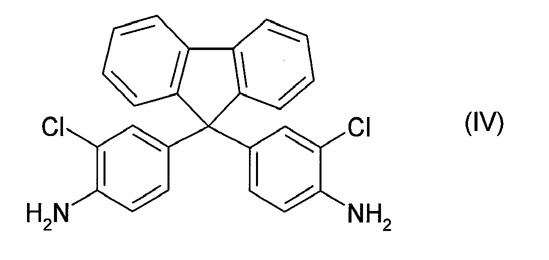 wherein the at least two compounds selected from compounds of the formulas (I), (II), (III) and/or (IV) are present in a weight ratio allowing these compounds to form an amorphous or liquid mixed phase at a temperature of 25 °C.

2. Composition according to Claim 1, wherein at least one of the diamines is selected from compounds of the formula (I).

3. Composition according to Claim 1 or 2, wherein in the compounds of formula (I) R₂ / R₂' and R₃ / R₃' are H and R₁ / R₁' and R₄ / R₄' are a C₁-C₄ alkyl group.

4. Composition according to Claim 1 or 2, wherein in the compounds of formula (I) one or both of R₂ / R₂' and R₃ / R₃' are Cl and both of R₁ / R₁' and R₄ / R₄' are a C₁-C₄ alkyl group.

5. Composition according to any one of Claims 1 to 5, wherein at least one of R₁ / R₁' and R₄ / R₄' is methyl, ethyl or isopropyl.

6. Composition according to any one of Claims 1 to 5, wherein R₅, R₆, R₇ and R₈ in the compounds of the formula (II) are the same or different and represent H, methyl, ethyl or isopropyl.

7. Composition according to any one of Claims 1 to 6, wherein the at least two diamines are selected from the group consisting of 4,4'-methylene-bis-(2,6-diethylaniline) (M-DEA), 4,4'-methylene-bis-(2,6-diisopropylaniline) (M-DIPA), 4,4'-methylene-bis-(2-isopropyl-6-methylaniline) (M-MIPA), 4,4'-methylene-bis-(2-isopropylaniline) (M-bis-IPA), 4,4'-methylene-bis-(3-chloro-2,6-diethylanlinine) (M-CDEA), 3,5-dimethylthio-2,6-toluenediamine and 3,5-dimethylthio-2,4-toluenediamine and isomeric mixtures thereof, 3,5-diethyl-2,6-toluenediamine and 3,5-diethyl-2,4-toluenediamine and isomeric mixtures thereof (DETDA), and triethylphenylenediamine (TEPDA).

8. Composition according to any one of Claims 1 to 7, wherein the at least two diamines are selected from combinations of M-MIPA/M-CDEA, M-MIPA/M-DIPA, M-CDEA/M-bis-IPA, M-MIPA/DETDA, M-CDEA/DETDA, M-CDEA/M-MIPA/DETDA and M-CDEA/M-DIPA/DETDA.

9. Composition according to any one of Claims 1 to 8, wherein at least two of the diamines in the composition are present in a weight ratio (w/w) of from 3:1 to 1:3, preferably of from 7:3 to 3:7.

10. Composition according to any one of Claims 1 to 9, wherein said composition comprises an amorphous or liquid mixed phase consisting of at least two diamines selected from compounds of the formulas (I), (II), (III) and/or (IV).

11. Process for the preparation of a curing composition according to claim 10, comprising:
(a) providing a melt of a mixture of diamines selected from compounds of the formulas (I), (II), (III) and/or (IV) as defined in Claim 1 in a weight ratio allowing these compounds to form an amorphous or liquid mixed phase at a temperature of 25 °C; and
(b) cooling the melt of step (a) to allow the compounds to form an amorphous or liquid mixed phase.

12. Use of a composition according to any one of Claims 1 to 10 as a curing agent in the preparation of polyurethanes and epoxy resins.

13. Use according to Claim 12 for adjusting the gel time of the polymers.

14. Use according to Claim 12 for adjusting the glass transition temperature of the polymers.
